# EUROPEAN PATENT APPLICATION

(11) **EP 1 559 470 A1**
(43) Date of publication of application: **03.08.2005**
(21) Application number: 05100236.8
(22) Date of filing: 17.01.2005
(51) Int. Cl.: B01D 53/26, F26B 21/06

(54) **Refrigeration-based compressed-gas dryer**

(30) Priority: 30.01.2004 IT MI20040141
(71) Applicant: Domnick Hunter Hiross S.p.A., 35020 Sant'Angelo Di Piove (Padova) (IT)
(72) Inventor: Bellemo, Luciano, 30015 Chioggia (Venezia) (IT)
(74) Representative: Giugni, Valter

(57) **Abstract**

A refrigeration-based compressed-gas dryer (10) comprises a container (51), which encloses part of a group of heat exchangers (11) including a heat-recovery apparatus (20) and an evaporator (30). According to the invention, the dryer comprises a condensate drainage system (90), which is integrated with said group of heat-exchangers (11) to form a unitary assembly, wherein said condensate drainage system (90) comprises at least a sensor (56) that is adapted to detect the condensate level inside the container (51).

## Description

The present invention refers to a refrigeration-based compressed-gas dryer.

A refrigeration-based compressed-gas dryer of the above-cited kind is substantially a refrigeration machine, which is usually employed to remove moisture from a given flow of compressed air or, for the matter, any other kind of compressed gas. In this connection, although reference will be generally made to compressed air in the following description, this shall be understood as extending to include and applying to any other kind of compressed gas, or mixture of compressed gases, that might require dehumidifying.

The humidity that is present in compressed air is generally known as being the main cause of corrosion and premature breakdown of piping systems, leading eventually to a malfunction or even full unserviceability of the machines that use the compressed air. As a result, the need arises for this humidity to be removed from the compressed air prior to the latter being supplied to the machines and equipment that use it.

In its traditional mode of operation, a refrigeration-based compressed-air dryer usually works on the principle according to which the compressed air entering the dryer is cooled down in order to cause the humidity (water vapour) to condense.

The dryer essentially comprises a group of heat exchangers, which in turn include a heat recovery apparatus, or gas-to-gas heat exchanger, an evaporator, or gas-to-coolant heat exchanger, and a condensate separator.

Connected to this group of heat exchangers, again on the outside thereof, there is a condensate drainage system.

These condensate drainage systems may comprise, for example, a condensate exhaust apparatus and a container for the condensate to accumulate therein, which must be suitably resistant to the pressure of the refrigerated compressed air, which it comes in contact with.

The compressed air to be dried contains water vapour, which usually has a relative humidity of approximately 100%.

Therefore, the compressed air is first pre-cooled in the heat recovery apparatus, and continues then to cool down in a cooling section of the evaporator until it reaches down to the desired dew point.

To achieve such cooling-down effect, use is made of a coolant, or refrigerant medium, which evaporates in an evaporation section of the same evaporator. This evaporating refrigerant medium is produced by a refrigerating circuit.

At this point, the compressed air, upon having been so cooled down in the heat recovery apparatus in the first place and the evaporator in the second place, reaches a condensate separator, in which the condensed water vapour is separated from the air. The resulting condensate is then let off through a duly provided condensate drainage arrangement.

The air flowing out of such condensate separator moves through the initial heat recovery apparatus, so as to bring about the pre-cooling process by exchanging heat with the compressed air flowing into the dryer.

The provision of condensate drainage systems that are arranged on the outside of the dryer, and therefore also of the group of heat exchangers, has a major drawback in that it implies a bulkier size of the entire dryer and a resulting greater difficulty in positioning it conveniently.

Another typical drawback of refrigeration-based compressed-air dryers using so-called "smart"-type condensate drainage systems (that is drain systems that discharge only condensate and not compressed air) lies in the fact that they need condensate drainage systems that are provided with a condensate collecting container placed on the outside of the dryer, and resistant to pressure, into which condensate is collected for convenient accumulation prior to be let off by means of a proper condensate drainage arrangement.

Yet a further drawback derives in this case from the fact that condensate drainage arrangements are in all cases located on the outside of the heat-exchanger group.

Based on the above considerations, it therefore is a main object of the present invention to do away with the above-indicated drawbacks of prior-art solutions in a manner that is extremely simple, low-cost, practical and ensuring proper operation.

Another purpose of the present invention is to provide a refrigeration-based compressed-air dryer, which is integrated with a condensate drainage system to form a unitary assembly, in view of reducing costs and space requirements, i.e. increase compactness.

Yet another purpose of the present invention is to provide a refrigeration-based compressed-air dryer, which is of an adequately compact design so as to allow for convenient integration within the systems in which it is installed or built in.

According to the present invention, these aims are reached in a condensate drainage system for a refrigeration-based compressed-air dryer, which incorporates the characteristics and features as recited in the appended claims.

Anyway, the structural, operating and construction-related features of the present invention, as well as the advantages thereof over similar prior-art solutions, will be more readily understood from the detailed description that is given below by way of non-limiting example with reference to the accompanying drawings, which illustrate a condensate drainage system for a refrigeration-based compressed-air dryer made in accordance with the innovative principles of the present invention, and in which:

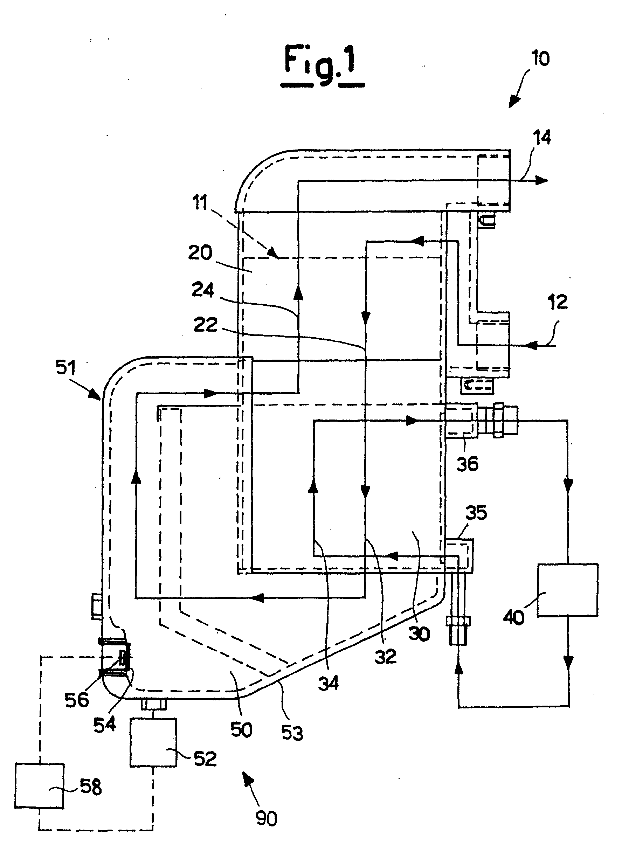

- Figure 1 is a schematical view of a preferred embodiment of a dryer according to the present invention.

With reference to Figure 1, a condensate drainage system for a refrigeration-based compressed-air dryer of the above-mentioned kind is generally indicated at 10 and, in the exemplary embodiment of the present invention illustrated in the Figure, it comprises a group of heat exchangers 11, which in turn includes a heat recovery apparatus or gas-to-gas heat exchanger 20 and an evaporator or gas-to-coolant heat exchanger 30.

The dryer 10 also comprises a container 51, which encloses part of said group of heat exchangers 11, and a condensate drainage system 90 integrated with said group of heat exchangers 11 into a unitary assembly, thereby obtaining a dryer which is very compact and has very low space requirements.

The gas-to-gas heat exchanger 20 has a so-called pre-cooling section 22 for the compressed air to be dried, and a heating section 24 for the dried compressed air, whereas the evaporator 30 has a cooling section 32 for the compressed air and an evaporation section 34 for a coolant, or refrigerant medium, which flows through a refrigerating circuit 40.

The dryer 10 further comprises condensate separator 50 housed within said container 51.

Heat-exchange processes in the heat exchangers provided in said group of heat exchangers 11 can take place either in a counterflow or a cross-flow pattern, or even a combination thereof.

The heat exchangers included in the group of heat exchangers 11 may by way of example be made in a so-called "bar&plate" technology, which is based on the related aluminium parts being brazed in vacuum or controlled-atmosphere furnaces, as well as the use of highly efficient finned heat-exchange surfaces.

The two heat exchangers provided in the group of heat exchangers 11 may be arranged in a variety of manners, such as for instance juxtaposed, i.e. next to each other, or on top of each other.

Furthermore, in view of obtaining a group of heat exchangers 11 that is yet more compact in size, the condensate separator 50 is preferably located near the evaporator 30.

Condensate separation in said condensate separator 50 may again occur in a variety of manners. So, for example, use can be made to this purpose of a metal wire, or the like, generally referred to as demister in the art, or finned surfaces identical or similar to the ones used in the above-cited heat-exchangers, or even centrifugal elements.

In all cases, condensate being produced in the group of heat exchangers 11 is separated by means of this condensate separator 50 to be then collected in a bottom portion 53 of the container 51 of the dryer 10.

The condensate drainage system 90 includes an electronic processing and control unit 58, as well as a condensate exhaust arrangement 52, which, in a preferred embodiment, is directly connected to a bottom portion 53 of the container 51 of the dryer 10 and is controlled by said electronic unit 58.

The condensate drainage system 90 comprises at least a sensor 56, which is adapted to detect the level of the condensate collecting into the bottom portion 53 of the container 51 of the dryer 10, and said at least a sensor 56 is arranged inside or outside said bottom portion 53 of the container 51 of the dryer 10.

Said at least a level sensor 56 is therefore adapted to detect the level of the condensate being separated by the air condenser 50 and collecting inside said bottom portion 53 of the container 51.

The condensate exhaust arrangement 52 is in turn provided with a condensate outlet valve to let off the condensate accumulating in the bottom portion 53 of the container 51 of the dryer 10.

Furthermore, said condensate outlet valve of the condensate exhaust arrangement 52 is preferably an electromagnetic valve adapted to be operated by the electronic control unit 58.

In the same way as the condensate outlet valve, even said at least a level sensor 56 is supplied and controlled by the electronic processing and control unit 58.

In a preferred manner, said electronic processing and control unit 58 also controls the operation of the whole dryer 10.

The electronic unit 58 receives at least a signal from said at least a level sensor 56 and, based on this signal, it controls the condensate exhaust arrangement 52, and in particular the outlet valve, to actuate into opening. A variety of different control logics may be adopted in this connection, all of which shall however be based on the principle of discharging only the condensate and not the compressed air by taking advantage of the volume of the bottom portion 53 of the container 51, in which the condensate collects, while at the same time maintaining there such a condensate level as to avoid causing the same condensate from being entrained under a resulting increase in the dew point.

Furthermore, should anomalous conditions arise for any reason whatsoever, said electronic unit 58 is capable of issuing an appropriate alarm signal.

Just to make an example, an anomalous condition may occur when, upon opening the outlet valve, the level of the condensate being detected by the level sensor 56 fails to appropriately decrease after a pre-set, sufficiently long length of time.

Said at least level sensor 56 is preferably a sensor of the capacitive type.

In another preferred embodiment, said at least a sensor 56 is actually formed by an arrangement of two sensors, i.e. a first sensor and a second sensor adapted to detect a lowest allowable level and a highest allowable level, respectively, of the condensate inside the bottom portion 53 of the container 51.

In this way, when the second sensor senses that the highest allowable condensate level has been reached, the electronic control unit 58 actuates the outlet valve of the condensate exhaust arrangement 52 into opening, and keeps it in its open state until the lowest allowable level of the condensate, as detected by the first sensor, is eventually reached, when it will then actuate said outlet valve of the condensate exhaust arrangement 52 into closing.

According to a preferred embodiment, the dryer includes a condensate separator 50 made of metal, as well as at least a sensor 56 of the capacitive type.

In addition, the condensate drainage system 90 comprises a sensor-holder 54, preferably made of plastics and resistant to pressure, to properly accommodate said at least a sensor 56 inside the bottom portion 53 of the container 51.

The level sensor 56 is secured to said sensor-holder 54, at an adequate distance from the metal walls of the container 51 of the dryer 10, so as to prevent it from being improperly affected by said walls.

Furthermore, by having the electronic unit 58 adapted to preferably control the operation of the whole dryer 10, further optimisation, standardization and cost-reduction opportunities are created.

A further advantage derives from the possibility for standard or, anyway, readily available and easily found component parts, such as the electromagnetic outlet valve 52, to be used, as well as for an additional pressure-resistant vessel to be built in to accommodate the level sensor 56, thereby reducing both costs and sizes.

In this way, by integrating the condensate drainage system 90 with the group of heat exchangers, it is possible for a dryer 10 to be provided, which is more compact and convenient in use, while at the same time reducing the overall costs thereof.

In an advantageous manner, the dryer 10 comprises an evaporator 30 and a heat recovery apparatus 20 that are integrated with each other to form a single, unitary piece, as well as with the condensate drainage system 90 to form a unitary assembly therewith.

From what has been set forth in the above description with reference to the accompanying drawing, it can be most readily appreciated how a refrigeration-based compressed-gas dryer according to the present invention can actually be considered as being particularly useful and advantageous, thereby fully reaching the afore indicated aim of the present invention.

It will of course be readily appreciated that the refrigeration-based compressed-gas dryer according to the present invention may be embodied in a number of ways differing from the ones that have been described hereinbefore and illustrated in the accompanying drawing by mere way of non-limiting example, and the materials indicated in connection with the construction of the various parts of the dryer may also be different, without departing from the scope of the present invention as defined by the appended claims.

## Claims

1. Refrigeration-based compressed-gas dryer (10) comprising a container (51), which encloses part of a group of heat-exchangers (11) including a heat-recovery apparatus (20) and an evaporator (30), **characterized in that** the dryer comprises a condensate drainage system (90), which is integrated with said group of heat-exchangers (11) to form a unitary assembly, wherein said condensate drainage system (90) comprises at least a sensor (56) that is adapted to detect the condensate level inside the dryer (10).

2. Dryer (10) according to claim 1, **characterized in that** it comprises a condensate separator (50) located inside said container (51) close to the evaporator (30).

3. Dryer according to claim 1, **characterized in that** said condensate drainage system (90) comprises an electronic control unit (58) and a condensate exhaust arrangement (52).

4. Dryer (10) according to claim 3, **characterized in that** said condensate exhaust arrangement (52) is directly connected with a bottom portion (53) of the container (51) of the dryer (10).

5. Dryer (10) according to claim 3 or 4, **characterized in that** said condensate exhaust arrangement (52) comprises an outlet valve for letting off the condensate accumulating in the bottom portion (53) of the container (51) of the dryer (10).

6. Dryer (10) according to claim 5, **characterized in that** said condensate outlet valve of the condensate exhaust arrangement (52) is an electromagnetic valve.

7. Dryer (10) according to claim 2, **characterized in that** said condensate separator (50) is made of metal.

8. Dryer (10) according to any of the preceding claims, **characterized in that** said at least a sensor (56) is housed inside the bottom portion (53) of the container (51) of the dryer (10).

9. Dryer (10) according to any of the preceding claims 1 to 7, **characterized in that** said at least a sensor (56) is housed outside the bottom portion (53) of the container (51) of the dryer (10).

10. Dryer (10) according to claim 8, **characterized in that** said at least a sensor (56) is constituted by two level sensors adapted to detect a lowest allowable level and a highest allowable level, respectively, of the condensate inside the bottom portion (53) of the container (51) of the dryer (10).

11. Dryer (10) according to claim 10, **characterized in that** said at least a sensor (56) is a capacitive-type sensor.

12. Dryer (10) according to any of the preceding claims 8 to 11, **characterized in that** said condensate drainage system (90) comprises at least a sensor-holder (54) adapted to properly accommodate said at least a sensor (56).

13. Dryer (10) according to claim 12, **characterized in that** said least a sensor-holder (54) is made of a plastic material.

14. Dryer (10) according to any of the preceding claims, **characterized in that** it includes a tap and/or filter.

15. Dryer (10) according to any of the preceding claims, **characterized in that** said tap is connected to the bottom portion (53) of the container (51) of the dryer (10).

16. Dryer (10) according to any of the preceding claims, **characterized in that** said filter is connected to the bottom portion (53) of the container (51) of the dryer (10).

17. Dryer (10) according to any of the preceding claims, **characterized in that** said heat recovery apparatus (20) and said evaporator (30) are integrated with each other and with the condensate drainage system (90) to form a single-piece, unitary assembly.

18. Refrigeration-based compressed-gas dryer (10) according to any of the preceding claims, **characterized in that** said electronic control unit (58) is the same one that also controls the operation of the entire dryer (10).
